# EUROPÄISCHE PATENTSCHRIFT

(11) **EP 1 512 560 B1**
(45) Veröffentlichungstag und Bekanntmachung des Hinweises auf die Patenterteilung: **03.10.2007**
(21) Anmeldenummer: 04019871.5
(22) Anmeldetag: 21.08.2004
(51) Int. Cl.: B60G 17/02, B60G 11/50, B60G 21/055

(54) **Verstellbares Fahrwerk**
Adjustable chassis
Chassis réglable

(30) Priorität: 03.09.2003 DE 10340470
(43) Veröffentlichungstag der Anmeldung: 09.03.2005
(73) Patentinhaber: ZF FRIEDRICHSHAFEN AG, 88046 Friedrichshafen (DE)
(72) Erfinder: Causemann, Peter, Dr., 97422 Schweinfurt (DE); Gilsdorf, Heinz-Joachim, 97499 Donnersdorf (DE); Kühnel, Joachim, 97456 Dittelbrunn (DE)

(56) Entgegenhaltungen:
- DE-A1- 3 928 062
- DE-A1- 19 802 489
- FR-A- 1 489 223
- FR-A- 2 536 019
- US-B1- 6 217 047
- PATENT ABSTRACTS OF JAPAN Bd. 017, Nr. 430 (M-1460), 10. August 1993 (1993-08-10) & JP 05 092715 A (KAYABA IND CO LTD), 16. April 1993 (1993-04-16)
- PATENT ABSTRACTS OF JAPAN Bd. 1996, Nr. 05, 31. Mai 1996 (1996-05-31) & JP 08 011516 A (ISUZU MOTORS LTD), 16. Januar 1996 (1996-01-16)

## Beschreibung

Die Erfindung betrifft ein verstellbares Fahrwerk entsprechend dem Oberbegriff von Patentanspruch 1.

Aus der US 3 484 091 ist ein verstellbares Fahrwerk bekannt, dass einen Längslenker aufweist, der von einer Hauptfeder in der Bauform einer Schraubendruckfeder und eine Hilfsfeder in der Bauform einer Blattfeder vorgespannt wird. Um verschiedene Belastungsfälle der Hauptfeder besser ausgleichen zu können, ist die Hilfsfeder bzw. Blattfeder in ihrer Vorspannung über einen Elektromotor in Verbindung mit einem Vorspannnocken einstellbar. Ein gravierender Nachteil dieser Konstruktion besteht darin, dass als Hilfsfeder eine Blattfeder eingesetzt wird, deren Federrate prinzipbedingt eine relativ große Federkraftstreuung aufweist. Des Weiteren verfügt eine Blattfeder häufig über eine Eigendämpfung, die ebenfalls nicht erwünscht ist.

Die US 6 517 089 B2 beschreibt ein verstellbares Fahrwerk, bei dem in Längsrichtung des Fahrzeugs angeordnete Torsionsstäbe jeweils in einem Schwenklager einer Fahrzeugachshälfte angreifen. Ein einziger Elektromotor kann unter Zwischenschaltung eines Getriebes beide Torsionsstäbe gegenläufig verdrehen, so dass sich die Niveaulage des Fahrzeugs anpassen lässt. Für eine verstellbare Gegenkraft bei einer Wankbewegung steht eine hydraulische Verstelleinrichtung zur Verfügung, die den Elektroantrieb zusammen mit dem Getriebe in Verbindung mit den Torsionsstäben zu einem verstellbaren Stabilisator werden lässt.

Bei diesem Fahrwerksaufbau kommen zwei völlig verschiedene Energieformen zum Einsatz. Einerseits wird ein Elektromotor für die Niveaulage und andererseits eine hydraulische Verstelleinrichtung für die Stabilisatorfunktion eingesetzt, wodurch auch zwei verschiedene Energieformen und entsprechende technische Systeme bereitgestellt werden müssen.

Aus der DE 198 02 489 A1 ist ein verstellbares Fahrwerk, umfassend einen an einem Fahrzeugaufbau schwenkbar gelagerten Achslenker für ein erstes Rad einer Achse und einen zweiten schwenkbar gelagerten Achslenker für ein zweites Rad derselben Achse bekannt. Beide Achslenker tragen über jeweils eine Hauptfeder und einer zusätzlichen Hilfsfeder den Fahrzeugaufbau, wobei die Hilfsfeder als Torsionsstab ausgebildet und mittels Aktuators beliebiger Bauart verstellbar ist. In diesem Zusammenhang sind noch die DE 39 28 062 A1 und die US 6 217 047 B1 zu nennen.

Aufgabe der vorliegenden Patentanmeldung ist es, eine Aktuatorik für ein verstellbares Fahrwerk zu realisieren, das sich bei möglichst vieler Achsgrundkonstruktion anwenden lässt.

Erfindungsgemäß wird die Aufgabe die Merkmale der Patentansprüche 1 oder 2 gelöst.

Diese Varianten ermöglichen die Beibehaltung der konventionellen Stabilisatorkonstruktion und der damit verbundenen Anordnung der Baugruppe im räumlichen Umfeld des Stabilisators.

Bei einer ersten Variante sind die beiden Elektromotoren in Reihe zueinander angeordnet sind. Alternativ kann der erste Elektromotor koaxial innerhalb des zweiten Elektromotors angeordnet sein. Die Entscheidung für oder gegen eine der beiden Ausführungsformen ist fahrzeugspezifisch vorzunehmen, da die vorhandene Bauraumsituation maßgeblich sein dürfte.

Des Weiteren ist vorgesehen, dass die Elektromotoren ausgehend von einer Normal-Niveaulage in beide Richtung eine Arbeitsbewegung ausführen können. Diese Maßnahme ermöglicht die Verwendung der beiden Elektromotoren für eine Horizontierung und eine Unterdrückung der Rollbewegung des Fahrzeugaufbaus, ohne dass ein hydraulischer Aktuator eingesetzt werden muss.

Anhand der folgenden Figurenbeschreibung soll die Erfindung näher erläutert werden.

Es zeigt:
- Fig. 1: Verstellbares Fahrwerk mit getrennten Torsionsstäben mit Elektromotoren
- Fig. 2: Stabilisatoranordnung mit zwei Elektromotoren in Reihenanordnung
- Fig. 3: Stabilisatoranordnung mit koaxialer Bauweise der Elektromotoren

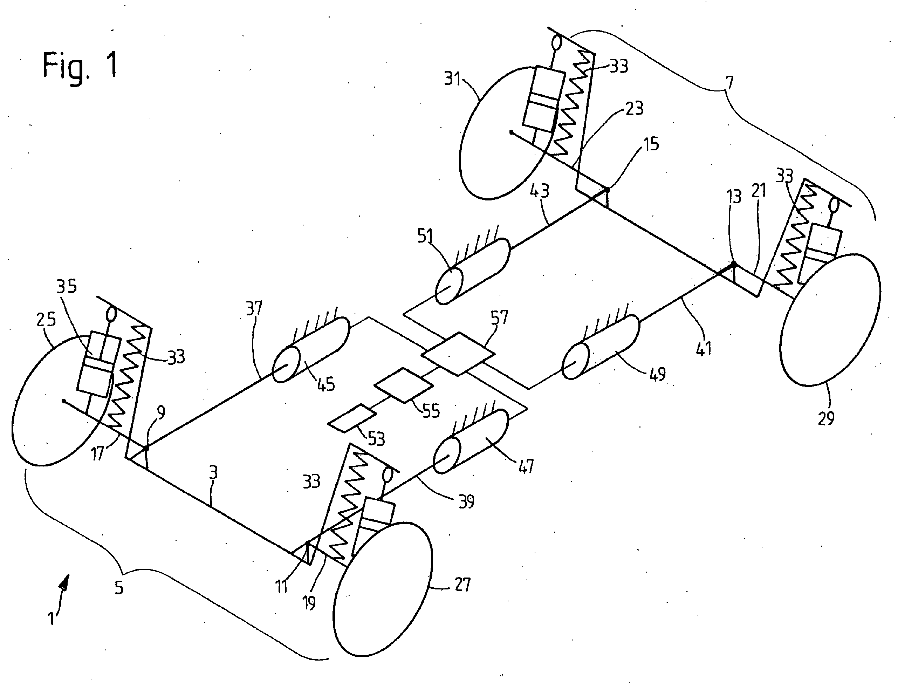

Die Fig. 1 zeigt ein Fahrzeug 1 mit einem Fahrzeugaufbau 3, der von einer Vor- und einer Hinterachse 5; 7 getragen wird. Von den Achsen sind jeweils in einem Lager 9; 11; 13; 15 schwenkbar gelagerten erste und zweite Achslenker 17; 19; 21; 23 für ein erstes und ein zweites Rad 25; 27; 29; 31 dargestellt, wobei die Achslenker als Querlenker ausgeführt sind. Jeder Achslenker trägt eine Hauptfeder 33, die den Fahrzeugaufbau als Grundlast trägt. Symbolisch ist der Hauptfeder ein Schwingungsdämpfer 35 parallel geschaltet. Das Federprinzip der Hauptfeder ist für die Erfindung von untergeordneter Rolle.

Des Weiteren umfassen die Achslenker eine Hilfsfeder in der Bauform eines Torsionsstabes 37; 39; 41; 43, der jeweils in dem Lager 9-15 des Achslenker 17-23 drehmomentübertragend eingreift. An dem anderen Ende des Torsionsstabes 37-43 ist ein Elektromotor 45-51 angeordnet, der sein Antriebsmoment am Fahrzeugaufbau 3 abstützt. Jeder Torsionsstab 37-43 verfügt über einen separaten Elektromotor, wobei der Elektromotor ausgehend von einer Normal-Niveaulage in beide Richtungen eine Arbeitsbewegung ausführen kann. Aus Bauraumgründen im Fahrzeug verlaufen die Torsionsstäbe 37-43 parallel zur Fahrzeuglängsachse.

Bei einer derartigen Anordnung kann die Aktuatorik 37-51 auch zu einem späteren Zeitpunkt in eine Fahrzeugachse nachgerüstet werden.

Zur Regelung der Elektromotoren kommt eine Sensorik 53 zur Anwendung, die die Fahrzeugbewegung sensiert. Die Signale der Sensorik werden von einem Rechner 55 an einen Leistungsverteiler 57 weiter gegeben, der die Elektromotoren 45-51 selektiv ansteuert. Dabei kann man vorsehen, das durch die Änderung der Vorspannung der Torsionsstäbe lediglich dynamisch Karosseriebewegungen kompensiert werden sollen. Alternativ kann bei entsprechend erhöhtem Energieeinsatz auch eine vollständige Lageregelung mit Niveau-Ausgleich vorgenommen werden.

Bei einer Längsbeschleunigung des Fahrzeugs würde der Fahrzeugaufbau an der Hinterachse 7 absinken. Durch eine Unterstützung einer Ausfederungsbewegung an der Hinterachse und einer Einfederungsbewegung an der Vorderachse kann der Fahrzeugaufbau durch die Elektromotoren in Verbindung mit den Torsionsstäben mit einem relativ geringen Energieaufwand horizontal gehalten werden. Einer Wankbewegung des Fahrzeugaufbaus kann ebenfalls durch den kombinierten Einsatz beider Elektromotoren 45; 47/49; 51 einer Achse begegnet werden. Je nach Richtung der Wankbewegung führen beide Elektromotoren einer Achse eine gleichgerichtete Drehbewegung aus, wodurch ein Torsionsstab stärker vorgespannt wird, hingegen der andere Torsionsstab entspannt wird. Letztlich kann durch eine sinnvolle Regelung der Elektromotoren jede Fahrzeugaufbaubewegung kompensiert werden.

Bei einer Anwendung der Aktuatorik an allen Achsen eines Fahrzeugs könnten gleiche Torsionsstäbe und Elektromotoren verwendet werden, wodurch der Systempreis günstig gehalten werden kann. Zusätzlich wird der Vorteil erreicht, dass insgesamt ein "trockenes System", das heißt ölfreies System vorliegt, das sich leichter installieren und entsorgen lässt.

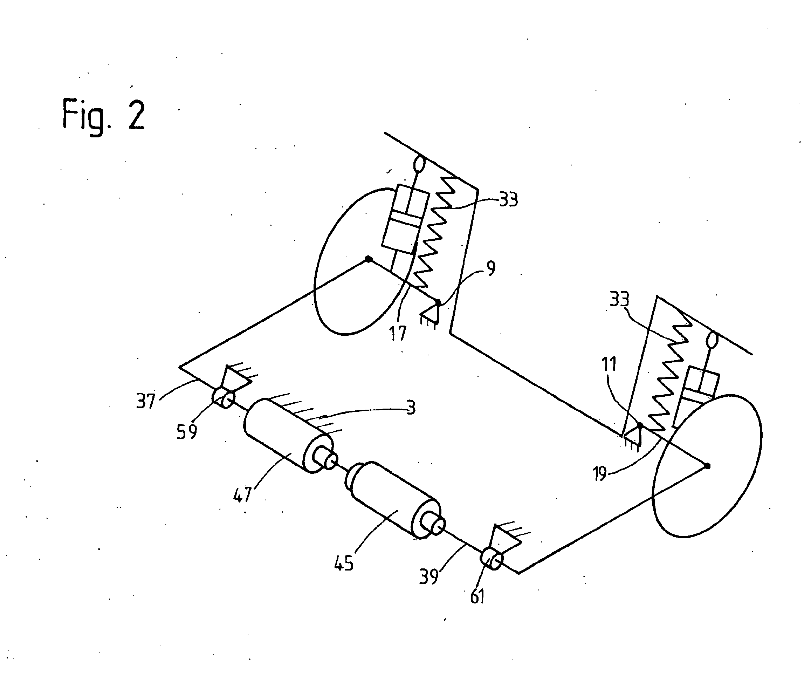

In der Ausführungsform nach Fig. 2 kommt eine u-förmiger Stabilisatoranordnung zur Anwendung, deren beide Torsionsstäbe 37; 39 mit dem ersten Elektromotor 45 verbunden sind. Dieser Elektromotor stützt sein Antriebsmoment an dem einen Torsionsstab an und verdreht den anderen Torsionsstab relativ dazu, wodurch eine Aufstellkraft auf den Fahrzeugaufbau 3 ausgeübt wird. Eine synchrone Federungsbewegung der beiden Räder einer Achse wird dadurch nicht beeinflusst.

Der zweite Elektromotor 47 ist in Reihe zu dem ersten Elektromotor 45 angeordnet und stützt sein Antriebsmoment, dass nur an einem der beiden Torsionsstäbe 37; 39 angreift, am Fahrzeugaufbau 3 ab. Bei einer gleichzeitigen Ein- oder Ausfederungsbewegung beider Räder einer Achse kann der zweite Elektromotor 47 die gesamten Stabilisatoranordnung um die von zwei Buchsen 59; 61 gebildete Querachse verdrehen. Der erste Elektromotor 45 ist bestromt und übt ein Haltemoment auf die Torsionsstäbe 37; 39 aus, damit sich die beiden Räder der Achse auch gleichartig bewegen.

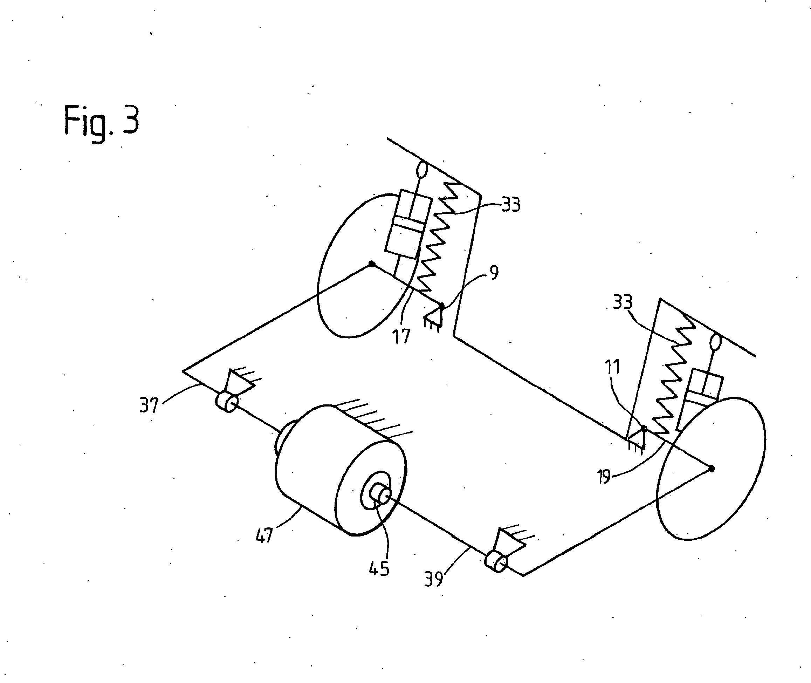

Die Variante nach Fig. 3 gleicht funktional der Fig. 2. Die Abwandlung besteht darin, dass der erste Elektromotor 45 koaxial innerhalb des zweiten Elektromotors 47 angeordnet ist und damit den Rotor für den zweiten Elektromotor bildet. Bei einer Wankbewegung kann der zweite Elektromotor 47 stromlos bleiben.

Die Ausführungsformen nach den Figuren 2 und 3 erlauben auch die überlagerte Kompensation von Wank- und Nickbewegungen des Fahrzeugaufbaus, indem gezielt eine Vorspannung über die beiden Elektromotoren in die Torsionsstäbe eingeleitet wird.

## Patentansprüche

1. Verstellbares Fahrwerk, umfassend einen an einem Fahrzeugaufbau (3) schwenkbar gelagerten ersten Achslenker (17, 21) für ein erste Rad (25, 29) einer Achse und einen zweiten schwenkbar gelagerten Achslenker (19, 23) für ein zweites Rad (27, 31) der Achse, wobei der erste und der zweite Achslenker (17, 19, 21, 23) jeweils eine Hauptfeder (33) für den Fahrzeugaufbau (3) tragen und eine Hilfsfeder aufweisen, die von einem Antriebsaggregat in ihrer Vorspannung einstellbar ist, wobei die Hilfsfeder pro Achslenker jeweils von einem Torsionsstab (37, 39, 41, 43) gebildet wird, der an dem Achslenker (17, 19, 21, 23) angreift und zwei Elektromotoren (45, 47, 49, 51) als Antriebsaggregate die Torsionsstäbe vorspannen (37, 39, 41, 43),
**dadurch gekennzeichnet,**
**dass** die Torsionsstäbe (37-43) zu einer u-förmigen Stabilisatoranordnung zusammengefasst sind, wobei zwischen den beiden Torsionsstäben ein erster Elektromotor (45; 49) für die Einleitung eines Torsionsmoments und ein zweiter Elektromotor (47; 51) für eine Gesamtschwenkbewegung der Stabilisatoranordnung vorgesehen ist, wobei der zweite Elektromotor (47; 51) sein Antriebsmoment am Fahrzeugaufbau (3) abstützt, wobei die beiden Elektromotoren (45; 49; 47; 51) in Reihe zueinander angeordnet sind.

2. Verstellbares Fahrwerk, umfassend einen an einem Fahrzeugaufbau (3) schwenkbar gelagerten ersten Achslenker (17, 21) für ein erste Rad (25, 29) einer Achse und einen zweiten schwenkbar gelagerten Achslenker (19, 23) für ein zweites Rad (27, 31) der Achse, wobei der erste und der zweite Achslenker (17, 19, 21, 23) jeweils eine Hauptfeder (33) für den Fahrzeugaufbau (3) tragen und eine Hilfsfeder aufweisen, die von einem Antriebsaggregat in ihrer Vorspannung einstellbar ist, wobei, wobei die Hilfsfeder pro Achslenker jeweils von einem Torsionsstab (37, 39, 41, 43) gebildet wird, der an dem Achslenker (17, 19, 21, 23) angreift und zwei Elektromotoren (45, 47, 49, 51) als Antriebsaggregate die Torsionsstäbe (37, 39, 41, 43) vorspanhen,
**dadurch gekennzeichnet,**
**dass** die Torsionsstäbe (37-43) zu einer u-förmigen Stabilisatoranordnung zusammengefasst sind, wobei zwischen den beiden Torsionsstäben ein erster Elektromotor (45; 49) für die Einleitung eines Torsionsmoments und ein zweiter Elektromotor (47; 51) für eine Gesamtschwenkbewegung der Stabilisatoranordnung vorgesehen ist, wobei der zweite Elektromotor (47; 51) sein Antriebsmoment am Fahrzeugaufbau (3) abstützt, der erste Elektromotor (45; 49) koaxial innerhalb des zweiten Elektromotors (47; 51) angeordnet ist.

3. Verstellbares Fahrwerk nach den Ansprüchen 1 oder 2,
**dadurch gekennzeichnet,**
**dass** die Elektromotoren (45; 47; 49; 51) ausgehend von einer Normal-Niveaulage in beide Richtungen eine Arbeitsbewegung ausführen können.

## Claims

1. Adjustable chassis, comprising a first axle link (17, 21) for a first wheel (25, 29) of an axle pivotably mounted on a vehicle structure (3) and a second pivotably mounted axle link (19, 23) for a second wheel (27, 31) of the axle, the first and the second axle links (17, 19, 21, 23) carrying one respective main spring (33) for the vehicle structure (3) and comprising an auxiliary spring which may be adjusted in tension by a drive unit, the auxiliary spring for each axle link being formed by one respective torsion rod (37, 39, 41, 43) which engages the axle link (17, 19, 21, 23) and two electric motors (45, 47, 49, 51) as drive units biasing the torsion rods (37, 39, 41, 43), **characterized in that** the torsion rods (37-43) are combined into a U-shaped stabilising arrangement, a first electric motor (45; 49) being provided between the two torsion rods for the introduction of a torsional moment and a second electric motor (47; 51) being provided for a full pivoting motion of the stabilising arrangement, the second electric motor (47; 51) supporting the driving torque thereof on the vehicle structure (3), the two electric motors (45; 49; 47; 51) being arranged in series relative to one another.

2. Adjustable chassis, comprising a first axle link (17, 21) for a first wheel (25, 29) of an axle pivotably mounted on a vehicle structure (3) and a second pivotably mounted axle link (19, 23) for a second wheel (27, 31) of the axle, the first and the second axle links (17, 19, 21, 23) carrying one respective main spring (33) for the vehicle structure (3) and comprising an auxiliary spring which may be adjusted in tension by a drive unit, the auxiliary spring for each axle link being formed by one respective torsion rod (37, 39, 41, 43) which engages the axle link (17, 19, 21, 23) and two electric motors (45, 47, 49, 51) as drive units biasing the torsion rods (37, 39, 41, 43), **characterized in that** the torsion rods (37-43) are combined into a U-shaped stabilising arrangement, a first electric motor (45; 49) being provided between the two torsion rods for the introduction of a torsional moment and a second electric motor (47; 51) being provided for a full pivoting motion of the stabilising arrangement, the second electric motor (47; 51) supporting the driving torque thereof on the vehicle structure (3), the first electric motor (45; 49) being arranged coaxially inside the second electric motor (47; 51).

3. Adjustable chassis according to Claims 1 or 2, **characterized in that** the electric motors (45; 47; 49; 51) are able to perform a working movement in both directions from a standard level position.

## Revendications

1. Train roulant réglable, comprenant un premier guide d'essieu (17, 21) monté de manière à pouvoir pivoter sur une carrosserie de véhicule (3) pour une première roue (25, 29) d'un essieu et un deuxième guide d'essieu (19, 23) monté de manière à pouvoir pivoter pour une deuxième roue (27, 31) de l'essieu, le premier et le deuxième guides d'essieu (17, 19, 21, 23) comportant respectivement un ressort principal (33) pour la carrosserie de véhicule (3) et présentant un ressort auxiliaire dont la précontrainte peut être réglée par un groupe d'entraînement, le ressort auxiliaire de chaque guide d'essieu étant à chaque fois formé par une barre de torsion (37, 39, 41, 43) qui vient en prise avec le guide d'essieu (17, 19, 21, 23) et deux moteurs électriques (45, 47, 49, 51) faisant office de groupes d'entraînement réalisant la précontrainte des barres de torsion (37, 39, 41, 43), **caractérisé en ce que** les barres de torsion (37 - 43) sont assemblées en un arrangement stabilisateur en forme de U, un premier moteur électrique (45 ; 49) pour induire un moment de torsion et un deuxième moteur électrique (47 ; 51) pour un mouvement de pivotement global de l'arrangement stabilisateur étant prévus entre les deux barres de torsion, le deuxième moteur électrique (47 ; 51) appuyant son moment d'entraînement sur la carrosserie du véhicule (3), les deux moteurs électriques (45 ; 49 ; 47 ; 51) étant disposés dans une rangée l'un par rapport à l'autre.

2. Train roulant réglable, comprenant un premier guide d'essieu (17, 21) monté de manière à pouvoir pivoter sur une carrosserie de véhicule (3) pour une première roue (25, 29) d'un essieu et un deuxième guide d'essieu (19, 23) monté de manière à pouvoir pivoter pour une deuxième roue (27, 31) de l'essieu, le premier et le deuxième guides d'essieu (17, 19, 21, 23) comportant respectivement un ressort principal (33) pour la carrosserie de véhicule (3) et présentant un ressort auxiliaire dont la précontrainte peut être réglée par un groupe d'entraînement, le ressort auxiliaire de chaque guide d'essieu étant à chaque fois formé par une barre de torsion (37, 39, 41, 43) qui vient en prise avec le guide d'essieu (17, 19, 21, 23) et deux moteurs électriques (45, 47, 49, 51) faisant office de groupes d'entraînement réalisant la précontrainte des barres de torsion (37, 39, 41, 43), **caractérisé en ce que** les barres de torsion (37 - 43) sont assemblées en un arrangement stabilisateur en forme de U, un premier moteur électrique (45 ; 49) pour induire un moment de torsion et un deuxième moteur électrique (47 ; 51) pour un mouvement de pivotement global de l'arrangement stabilisateur étant prévus entre les deux barres de torsion, le deuxième moteur électrique (47 ; 51) appuyant son moment d'entraînement sur la carrosserie du véhicule (3), le premier moteur électrique (45 ; 49) étant disposé de manière coaxiale à l'intérieur du deuxième moteur électrique (47 ; 51).

3. Train roulant réglable selon les revendications 1 ou 2, **caractérisé en ce que** les moteurs électriques (45 ; 47 ; 49 ; 51) peuvent exécuter un mouvement de travail dans les deux directions à partir d'un niveau normal.
